(19) **Europäisches Patentamt European Patent Office Office européen des brevets**

(11) **EP 1 804 036 B1**

(12) **EUROPÄISCHE PATENTSCHRIFT**

(45) Veröffentlichungstag und Bekanntmachung des Hinweises auf die Patenterteilung:
**27.10.2010 Patentblatt 2010/43**

(51) Int Cl.:
***G01F 1/66*** (2006.01)

(21) Anmeldenummer: **06125730.9**

(22) Anmeldetag: **08.12.2006**

(54) **Ultraschall-clamp-on-durchflussmesser**

Ultrasonic clamp-on mass flow meter

Débitmètre à ultrasons à serrage

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **02.01.2006 DE 102006000693**

(43) Veröffentlichungstag der Anmeldung:
**04.07.2007 Patentblatt 2007/27**

(73) Patentinhaber: **Endress+Hauser Flowtec AG 4153 Reinach (CH)**

(72) Erfinder:
• **Berger, Andreas 4106, Therwil (CH)**

• **Berberig, Oliver 79739, Schwörstadt (DE)**
• **Wiest, Achim 79576, Weil am Rhein (DE)**

(74) Vertreter: **Andres, Angelika Maria Endress+Hauser (Deutschland) AG+Co. KG PatServe Colmarer Strasse 6 79576 Weil am Rhein (DE)**

(56) Entgegenhaltungen:
**EP-A- 0 408 148 DE-A1- 1 962 649 FR-A- 1 065 907 JP-A- 2001 050 941**

**Beschreibung**

Die Erfindung betrifft ein Clamp-On Ultraschall-Durchflussmessgerät zur Bestimmung und/oder Überwachung des Volumen- oder des Massedurchflusses eines Mediums, das eine Rohrleitung in Richtung der Längsachse der Rohrleitung durchströmt.

Ultraschall-Durchflussmessgeräte der zuvor genannten Art werden vielfach in der Prozess- und Automatisierungstechnik eingesetzt. Sie erlauben es, den Volumen- und/oder Massedurchfluss eines Mediums in einer Rohrleitung berührungslos zu bestimmen. Clamp-On Durchflussmessgeräte sind beispielsweise in der DE 196 26 49 A1, der EP 0 686 255 B1, der US-PS 4,484,478 oder der US-PS 4,598,593 beschrieben. Weiterhin werden von der Anmelderin Clamp-On Durchflussmessgeräte, die nach dem Laufzeitdifferenzverfahren arbeiten, unter der Bezeichnung PROSONIC FLOW angeboten und vertrieben.

Beim Laufzeitdifferenzverfahren wird die unterschiedliche Laufzeit von Ultraschall-Messsignalen in Strömungsrichtung und entgegen der Strömungsrichtung des Mediums ausgewertet. Aus der Laufzeitdifferenz der Ultraschall-Messsignale lässt sich die Fließgeschwindigkeit und damit bei bekanntem Durchmesser der Rohrleitung der Volumendurchfluss bzw. bei bekannter oder gemessener Dichte des Mediums der Massedurchfluss bestimmen.

Beim Doppler-Prinzip werden Ultraschall-Messsignale mit einer vorgegebenen Frequenz in das strömende Medium eingekoppelt. Die in dem Medium reflektierten Ultraschall-Messsignale werden ausgewertet. Anhand einer zwischen dem eingekoppelten und dem reflektierten Ultraschall-Messsignal auftretenden Frequenzverschiebung lässt sich ebenfalls die Strömungsgeschwindigkeit des Mediums bzw. der Volumen und/oder Massedurchfluss bestimmen.

Der Einsatz von Durchflussmessgeräten, die nach dem Doppler-Prinzip arbeiten, ist nur möglich, wenn in einem flüssigen Medium Luftbläschen oder Verunreinigungen vorhanden sind, an denen die Ultraschall-Messsignale reflektiert werden. Damit ist der Einsatz derartiger Ultraschall-Durchflussmessgeräte im Vergleich zu den Ultraschall-Durchflussmessgeräten, die z. B. nach dem Laufzeitdifferenz-Prinzip arbeiten, relativ stark beschränkt.

Bei Ultraschall-Durchflussmessgeräten, wenn sie nach dem Laufzeitdifferenz-, dem Doppler- oder dem Kreuzkorrelationsverfahren arbeiten, werden die Ultraschall-Messsignale unter einem vorgegebenen Winkel in die Rohrleitung bzw. in das Messrohr, in der bzw. in dem sich das strömende Medium befindet, ein- und ausgekoppelt. Um eine optimale Impedanzanpassung und damit optimale Ein- und Auskopplung zu erreichen, werden die Ultraschall-Messsignale über einen Vorlaufkörper bzw. einen Koppelkeil in die Rohrleitung eingekoppelt bzw. aus der Rohrleitung bzw. aus dem Messrohr ausgekoppelt. Hauptbestandteil eines Ultraschallsensors ist zumindest ein piezoelektrisches Element, welches die Ultraschall-Messsignale in einem definierten Frequenzbereich erzeugt und/oder empfängt.

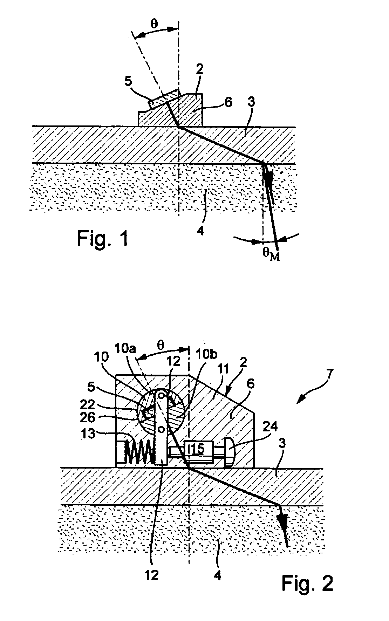

Die in einem piezoelektrischen Element erzeugten Ultraschall-Messsignale werden über einen Koppelkeil bzw. einen Vorlaufkörper und die Rohrwand in das fluide Medium geleitet. Bei dem Medium handelt es sich - wie bereits gesagt - entweder um eine Flüssigkeit oder um ein Gas. Aufgrund der relativ stark von dem Medium abhängigen Schallgeschwindigkeit kommt es an der Grenzfläche zweier unterschiedlicher Medien zu einer Brechung der UltraschallMesssignale. Der jeweilige Brechungswinkel errechnet sich nach dem Snellius Gesetz, d.h der Brechungswinkel ist abhängig von dem Verhältnis der Ausbreitungsgeschwindigkeiten zweier aneinander grenzender Medien. Eine entsprechende aus dem Stand der Technik bekannte Lösung ist in der Fig. 1 dargestellt.

Besonders problematisch gestaltet sich die Ein- und Auskopplung der Ultraschall-Messsignale, wenn die Rohrleitung aus Metall gefertigt ist und in der Rohrleitung ein gasförmiges Medium strömt. Da die Schallgeschwindigkeit eines Metalls und eines Gases üblicherweise um eine Größenordnung auseinander liegen, wird an der Grenzfläche sowohl beim Einkoppeln als auch beim Auskoppeln ein Großteil der Ultraschall-Messsignale rückreflektiert. Der rückreflektierte Anteil ist so groß, dass mit einem konventionellen Ultraschallsensor keine verlässliche Durchflussmessung möglich ist. Treten dann noch zusätzlich Fehlerquellen auf, die beispielsweise mit der Installation und Montage oder mit Änderungen der Umgebungsbedingungen zusammenhängen, so ist ein herkömmliches Ultraschall-Durchflussmessgerät für die jeweilige Applikation ungeeignet.

Der Erfindung liegt die Aufgabe zugrunde, eine Vorrichtung vorzuschlagen, bei der mit der Montage verbundene Installations- und Messfehler effektiv vermieden werden.

Die Aufgabe wird dadurch gelöst, dass zumindest ein Ultraschallsensor vorgesehen ist, der zumindest ein schallerzeugendes Element und einen Vorlaufkörper aufweist und der Ultraschall-Messsignale unter einem Einstrahl-/Ausfallwinkel in die Rohrleitung einstrahlt bzw. aus der Rohrleitung empfängt, dass ein erster Verstellmechanismus vorgesehen ist, der so ausgestaltet ist, dass der Einstrahl-/Ausstrahlwinkel des Ultraschallsensors in vorgegebenen Grenzen einstellbar ist, und dass eine Regel-/Auswerteeinheit vorgesehen ist, die den Volumen- oder den Massendurchfluss des Mediums in der Rohrleitung nach dem Laufzeitdifferenzverfahren, dem Kreuzkorrelationsverfahren oder dem Dopplerverfahren ermittelt. Bevorzugt ist übrigens an dem Verstellmechanismus eine Richtungscodiereinheit vorgesehen.

Vorlaufkörper sind allgemein bekannt und dienen als Koppelglied zwischen dem schallerzeugenden Element und der Rohrleitung. Der Vorlaufkörper ist üblicherweise geometrisch so ausgebildet, dass zwischen der Normalen der Dickenschwingungsebene des piezo-

elektrischen Elements und dem Rohrradius ein definierter Winkel $q_{VK}$ auftritt. Zur Maximierung des Messeffekts muss bei der Laufzeitdifferenzmessung der Schallpfad durch das in der Rohrleitung strömende Medium einen möglichst großen Winkel $\Theta_M$ (siehe Fig. 1) zum Rohrradius aufweisen. Idealerweise liegt der Winkel bei 90°, d.h. die Schallsignale verlaufen in diesem Fall parallel zur Längsachse der Rohrleitung. Weiterhin ist bekannt, dass entsprechend dem Brechungsgesetz nach Snellius bei reinen Longitudinalwellen bereits oberhalb eines relativ kleinen Winkels eine Totalreflexion der Schallwellen auftritt. Dies ist der Fall, wenn beispielsweise die Schallsignale von einer Flüssigkeit in eine Rohrleitung aus Stahl übergehen sollen. Der Totalreflexionswinkel liegt beim Übergang von Wasser in Stahl bei $q_{total,H2O} » 14°$ für Longitudinalwellen.

Aus diesem Grund wird bei Clamp-On Durchflussmessgeräten, die an eine Rohrleitung befestigt werden, üblicherweise eine reine Transversalwelle angeregt, da diese Transversalwelle einen relativ großen Übergangswinkel $q_{Fluid}$ zulässt. Der Vorlaufkörper ist üblicherweise aus Kunststoff gefertigt, da es dann möglich ist, innerhalb eines relativ großen Winkelbereichs reine Transversalwellen in der Rohrwand anzuregen. Als Beispiel sei ein Winkelbereich von 28° $£$ $q_{Plexi}$ $£$ 58° beim Übergang von Plexiglas in Stahl genannt. Innerhalb dieses Winkelbereichs ergibt sich im Stahl ein Winkelbereich von 30° $£$ $q_{Stahl}$ $£$ 90°. Unter dem Gesichtspunkt der übertragenen Schallleistung ist der effektiv nutzbare Winkelbereich jedoch deutlich kleiner. Der energie-effiziente Winkelbereich für Transversalwellen in Stahlrohren lässt sich durch folgende Abschätzung beschreiben: 38° $£$ $q_{Stahl}$ $£$ 70°. Aus dem vorgenannten Grund werden Vorlaufkörper üblicherweise so konstruiert, dass sie eine Transversalwelle unter einem konstanten Winkel $q_{Stahl}$ anregen, der innerhalb des vorgenannten Winkelbereichs liegt. Nähere Info ist der Veröffentlichung: 'Ultrasonic Sensors' von Asher, R.C., IOP Publishing Ltd 1997, zu entnehmen.

Zusammenfassend lässt sich sagen, dass zur Lösung der erfindungsgemäßen Aufgabe ein Ultraschall Clamp-On Durchflussmessgerät vorgeschlagen wird, bei dem die sendenden und/oder empfangenden Ultraschallsensoren durch geeignete konstruktive Maßnahmen einen definierten und konstanten Abstand voneinander aufweisen. Die Anpassung des Clamp-On Durchflussmessgeräts an die jeweilige Anwendung - hierbei spielen die Schallgeschwindigkeit der Rohrleitung, die Wandstärke und der Durchmesser der Rohrleitung und die Schallgeschwindigkeit des Mediums eine Rolle - erfolgt über eine Winkelverstellung der Dickenschwingung eines schall- bzw. ultraschallerzeugenden Elements relativ zum Radius der Rohrleitung.

Der Vorteil der erfindungsgemäßen Lösung mit winkelverstellbarem Vorlaufkörper ist darin zu sehen, dass die korrekte Montage des Messgeräts an der Rohrleitung erheblich vereinfacht wird. Insbesondere werden mit der Montage verbundene Ungenauigkeiten und Benutzerfehler vermieden.

Insbesondere empfiehlt sich der Einsatz eines erfindungsgemäßen winkelverstellbaren Clamp-On Durchflussmessgeräts in Zusammenhang mit der Erzeugung sog. Lambwellen. Dabei wird die Rohrleitung mittels schallerzeugender Elemente, insbesondere also mittels piezoelektrischer Elemente, über seine gesamte Dicke zu Scherschwingungen angeregt. Hierdurch werden Longitudinal-Schallwellen erzeugt, die das Medium unter einem durch das Gesetz von Snellius vorgegebenen Winkel parallel zueinander durchlaufen und alle zeitgleich an dem als Empfänger dienenden Ultraschallsensor ankommen.

Da für die Erzeugung von reinen Lambwellen eine eng definierte Voraussetzung erfüllt sein muss, nämlich

$$c_{long,VK} = c_{trans,Rohr} \cdot \sin(\vartheta_0)$$

wobei $\vartheta_0$ der Winkel zwischen der Dickenschwingerebene des piezo-elektrischen Elements und dem Radius der Rohrleitung ist, muss prinzipiell für jedes Rohrmaterial entweder ein entsprechend abgestimmtes Vorlaufkörper-material oder der entsprechend abgestimmte Einstrahl-/Ausfallwinkel vorhanden sein. Mittels des erfindungsgemäßen winkelverstellbaren Ultraschallsensors kann der Winkel $\vartheta_0$ an die jeweiligen Verhältnisse schnell und einfach angepasst werden. Als Folge davon lassen sich ganze Werkstoffklassen mit einem einzigen Clamp-On Ultraschallsensor für Lambwellen abdecken. Voraussetzung hierfür ist natürlich, dass die Winkelverstellbarkeit am sendenden und am empfangenden Ultraschallsensor vorhanden ist.

Die Vorteile des erfindungsgemäßen Lambwellenbasierten Clamp-On Durchflussmessgeräts sind vielfältig:

1. die Schallgeschwindigkeiten der Rohrleitung und des zu messenden flüssigen, gas- oder dampfförmigen Mediums müssen für die Berechnung des Durchflusses nicht im Voraus bekannt sein, sondern sie können aus den gemessenen Laufzeiten berechnet werden;

2. durch die Vielzahl der beteiligten Schallwellen wird ein großer Strömungsbereich erfasst, wodurch die Messgenauigkeit im Vergleich zu einem konventionellen Clamp-On Durchflussmessgerät zunimmt;

3. eine Winkelanpassung ist nur einmalig bei der Montage durchzuführen, da das Durchflussmessgerät aufgrund seiner mit der Lambwellenerzeugung verbundenen Eigenschaften sehr unempfindlich ist gegenüber Schallwinkeländerungen; diese treten beispielsweise bei hohen Strömungsgeschwindigkeiten oder bei Temperaturschwankungen des zu messenden Mediums auf.

Besonders vorteilhaft ist es, das erfindungsgemäße Ultraschall-Durchflussmessgerät, das auf der Basis von Lambwellen arbeitet, bei der Gasdurchflussmessung einzusetzen. Lambwellen des 0ten Modes müssen in den üblichen Metallrohrleitungen mit relativ niedrigen Frequenzen angeregt werden. Gerade diese Ultraschallwellen mit einer niedrigen Frequenz eignen sich besonders gut für Messungen in gas- oder dampfförmigen Medien.

Gemäß einer bevorzugten Ausgestaltung der erfindungsgemäßen Vorrichtung ist vorgesehen, dass der Verstellmechanismus so ausgestaltet ist, dass der Einstrahl-/Ausfallwinkel des Ultraschallsensors automatisch und/oder manuell verstellbar ist. Insbesondere ist der Verstellmechanismus im wesentlichen derart ausgestaltet, dass er eine Linearbewegung in eine definierte Drehbewegung des schallerzeugenden Elements umsetzt.

Ein weiterer Vorteil des erfindungsgemäßen rein Transversalwellenbasierten Durchflussmessgeräts ist darin zu sehen, dass bei automatisch verstellbarem Einstrahl-/Ausfallwinkel eine maximale Meßbetriebsrobustheit gegenüber Änderungen in den Messbedingungen, die zu einer Änderung des Einstrahl-/Ausfallwinkels führen, gegeben ist. Insbesondere sind in diesem Zusammenhang Temperaturschwankungen oder hohe Strömungsgeschwindigkeiten des Mediums in der Rohrleitung zu nennen.

Als besonders vorteilhaft wird es im Zusammenhang mit der vorliegenden Erfindung angesehen, wenn der Vorlaufkörper aus einer ersten Teilkomponente und einer zweiten Teilkomponente besteht. Bei der ersten Teilkomponente handelt es sich beispielsweise um ein rotationssymmetrisches Element, mit dem das schallerzeugende Element verbunden ist; darüber hinaus ist die erste Teilkomponente in einer korrespondierenden Ausnehmung in der zweiten Teilkomponente des Vorlaufkörpers drehbar gelagert.

Weiterhin ist vorgesehen, dass die erste Teilkomponente über einen Hebel gegen die Rückstellkraft einer Feder drehbar in der zweiten Teilkomponente gelagert ist. Alternativ ist die erste Teilkomponente über ein Zahnrad mit Übersetzungsantrieb drehbar in der zweiten Teilkomponente gelagert.

Bevorzugt weist die zweite Teilkomponente eine gekrümmte Fläche auf, auf der die erste Teilkomponente, mit der das schallerzeugende Element verbunden ist, zwangsgeführt ist. Insbesondere ist ein Linearantrieb vorgesehen, der über eine Gelenkverbindung mit der ersten Teilkomponente verbunden ist.

Eine vorteilhafte Ausgestaltung der erfindungsgemäßen Vorrichtung schlägt vor, dass die gekrümmte Fläche der zweiten Teilkomponente konkav oder konvex gekrümmt ist und dass die an der korrespondierenden gekrümmten Fläche der zweiten Teilkomponente angrenzende Fläche der ersten Teilkomponente so ausgestaltet ist, dass die erste Teilkomponente und zweite Teilkomponente jeweils im Bereich ihrer Kontaktfläche bündig aneinander anliegen. Bevorzugt hat die gekrümmte Fläche der zweiten Teilkomponente im Längsschnitt die Form eines Halbkreises.

Insbesondere ist vorgesehen, dass die gekrümmte Fläche der ersten Teilkomponente und die gekrümmte Fläche der zweiten Teilkomponente derart ausgeführt sind, dass der Mittelpunkt der beiden gekrümmten Flächen zumindest näherungsweise den Einkoppelpunkt der Schallsignale in die Rohrleitung darstellt.

Wie bereits an vorhergehender Stelle erwähnt, kann der Volumen- oder Massestrom mittels Ultraschall-Messsignalen auf verschiedene Art und Weise ermittelt werden. Wird das Laufzeitdifferenzverfahren angewendet, so sind bevorzugt zwei Ultraschallsensoren auf einer Verbindungslinie angeordnet sind, die parallel zur Längsachse der Rohrleitung ist. Der Abstand der beiden Ultraschallsensoren ist starr - alternativ kann er aber auch variierbar ausgestaltet sein. Bei der Alternative ist ein zweiter Verstellmechanismus vorgesehen, mit dem die beiden Ultraschallsensoren längs der Verbindungslinie relativ zueinander bewegt werden können.

Um einen optimalen Ein-/Ausstrahlwinkel automatisch einstellen zu können, steuert die Regel-/Auswerteeinheit den ersten Verstellmechanismus zur Einstellung des Einstrahl-/Ausfallwinkels sukzessive so an, bis für das gesendete bzw. das empfangene Ultraschall-Messsignal eine maximale Signalstärke ermittelt ist.

Weiterhin wird eine Speichereinheit vorgeschlagen, in der in Abhängigkeit von Parametern, die den Einstrahl-/Ausstrahlwinkel der Ultraschall-Messsignale in die Rohrleitung bzw. aus der Rohrleitung beeinflussen, entsprechende Sollwerte für den optimalen Einstrahl-/Ausfallwinkel abgespeichert sind.

Bevorzugt bestimmt die Regel-/Auswerteeinheit anhand der aktuellen Werte der Parameter den entsprechend abgespeicherten optimalen Einstrahl-/Ausfallwinkel und steuert den ersten Verstellmechanismus so an, dass die Ultraschall-Messsignale unter dem optimalen Einstrahl-/Ausfallwinkel in die Rohrleitung ein bzw. aus der Rohrleitung ausgestrahlt werden.

Bevorzugt ist der erste Stellmechanismus im wesentlichen so ausgestaltet, dass er eine Biegung des Stellelements in eine definierte Drehbewegung des schallerzeugenden Elements umsetzt.

Weiterhin ist vorgesehen, dass die erste Teilkomponente und die zweite Teilkomponente des Vorlaufkörpers aus dem gleichen Material gefertigt sind. Weiterhin ist es vorteilhaft, wenn zwischen der ersten Teilkomponente und der zweiten Teilkomponente des Vorlaufkörpers eine Koppelschicht vorgesehen ist, die so ausgestaltet ist, dass sie den Übergang des Schallsignals zwischen den beiden Teilkomponenten verbessert. Die Koppelschicht kann eine flüssige, gelartige oder feste Konsistenz haben.

Bevorzugt ist dem ersten Verstellmechanismus ein piezoelektrischer Antrieb zugeordnet. Die beiden Teilkomponenten des Vorlaufkörpers bestehen z.B. aus Materialien, die unterschiedliche Schallgeschwindigkeiten besitzen und die die Schallsignale unterschiedlich in Abhängigkeit von ihrer Position zur Ausbreitungsrichtung des Schalls brechen. Alternativ oder additiv ist das schallerzeugende Element starr derart an dem Gehäuse angebracht, so dass es von einer Verstellbewegung des Verstellmechanismus' abgekoppelt ist.

Die Erfindung wird anhand der nachfolgenden Figuren näher erläutert. Es zeigt:

Fig. 1: ein aus dem Stand der Technik bekannter Ultraschallsensor für ein Clamp-On Durchflussmessgerät im Längsschnitt,

Fig. 2: einen Längsschnitt durch eine erste Ausgestaltung eines erfindungsgemäßen winkelverstellbaren Ultraschallsensors,

Fig. 3: einen Längsschnitt durch eine zweite Ausgestaltung eines erfindungsgemäßen winkelverstellbaren Ultraschallsensors,

Fig. 4: einen Längsschnitt durch ein erfindungsgemäßes Clamp-On Durchflussmessgerät, bei dem die in Fig. 3 dargestellten Ultraschallsensoren zum Einsatz kommen,

Fig. 5: eine schematische Darstellung einer dritten Ausgestaltung eines erfindungsgemäßen winkelverstellbaren Ultraschallsensors,

Fig. 6: eine schematische Darstellung einer vierten Ausgestaltung eines erfindungsgemäßen winkelverstellbaren Ultraschallsensors in einer ersten Position,

Fig. 6a: der in Fig. 6 dargestellte Ultraschallsensor in einer zweiten Position, wobei die Verstellung des Winkels durch ein Biegeelement erfolgt,

Fig. 7: eine schematische Darstellung einer fünften Ausgestaltung eines erfindungsgemäßen winkelverstellbaren Ultraschallsensors in einer ersten Position und

Fig. 7a: der in Fig. 7 dargestellte Ultraschallsensor in einer zweiten Position.

In der einfachsten und kostengünstigsten Variante erfolgt eine Anpassung des Einstrahl- oder Ausfallwinkels Θ zwischen der Dickenschwingungsebene des schallerzeugenden, piezoelektrischen Elements 5 und dem Radius der Rohrleitung 3 durch ein manuelles Bedienen eines Verstellmechanismus' 7. Bei dem in Fig. 2 gezeigten Ausführungsbeispiel ist der Verstellmechanismus 7 integraler Teil des Vorlaufkörpers 6 und besteht aus einer zweiten Teilkomponente 11 mit einer Bohrung, in der die erste rotationssymmetrische Teilkomponente 10 drehbar gelagert ist. An der ersten Teilkomponente 10 ist das piezoelektrische Element 5 starr befestigt ist. Insbesondere befindet sich das piezoelektrische/piezokeramische Element 5 zwischen zwei Kreiszylinder-Hälften 10a, 10b, die sich zusammen zu einem die erste Teilkomponente 10 bildenden Vollzylinder ergänzen. Wie bereits gesagt, ist die zylinderförmige Teilkomponente 10 drehbar in eine Bohrung eingesetzt. Ein guter akustischer Kontakt wird durch Einsatz einer Koppelpaste/Koppelschicht 22 im Spalt zwischen der ersten Teilkomponente 10 und der Bohrung in der zweiten Teilkomponente hergestellt. Die Koppelschicht 22 dient gleichzeitig der Passungsschmierung.

Der Verstellmechanismus 7 setzt eine Linearbewegung, die durch das Handrad 24, den Linearantrieb 15 und den Hebel 12 realisiert ist, in eine Winkeldrehung der ersten Teilkomponente 10 bzw. des an der zweiten Teilkomponente 10 befestigten piezoelektrischen Elements 5 um. Die Winkeldrehung der ersten Teilkomponente 10 bzw. dies piezoelektrischen Elements erfolgt gegen die Rückstellkraft der Feder 13.

Die Justage der Ultraschallsensoren 2 erfolgt direkt nach deren Montage an der Rohrleitung 3. Bevorzugt gibt es hierzu einen Justage-Betriebsmodus, bei dem beispielsweise die Signalstärke und zusätzlich die Signalstärkeänderung in Form von Displaysymbolen, LEDs oder eines Zeigers angezeigt werden. Aufgrund dieser direkten Rückmeldung weiß der Bediener ohne weiteres, wie er den optimalen Einstrahl-/Ausfallwinkel des Ultraschallsensors 2, bei dem die Signalstärke des Nutzsignals maximal ist, einzustellen hat. Es versteht sich von selbst, dass die zuvor beschriebene manuelle Winkelverstellung auf relativ einfache Art und Weise in eine automatische Winkelverstellung umgesetzt werden kann, indem beispielsweise das Handrad 24 durch einen Elektromotor, der von der Regel-/Auswerteeinheit 9 angesteuert wird, ausgetauscht wird.

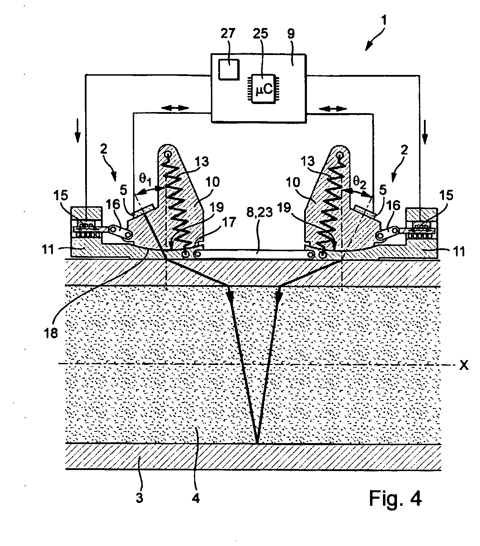

Bei dem erfindungsgemäßen Durchflussmessgerät 1, das in der Fig. 4 dargestellt ist, erfolgt die Anpassung des Einstrahl-/Ausfallwinkels zwischen der Dickenschwingungsebene des piezoelektrischen Elements 5 und dem Radius der Rohrleitung durch einen Regelkreis, der über einen Mikroprozessor 25 angesteuert wird. Insbesondere arbeitet der Verstellmechanismus 7 aktorgesteuert. Bei dieser Ausgestaltung bietet es sich an, dass die Justage des piezoelektrischen Elements 5 und/oder des Vorlaufkörpers 6 nicht nur nach der Montage der Ultraschallsensoren 2 an der Rohrleitung 3 stattfindet, sondern zyklisch in vorgegebenen Zeitabständen. Hierdurch ist es möglich, Änderungen in den Betriebsbedingungen, die sich auf den Einstrahl-/Ausfallwinkel der Ultraschallwellen direkt auswirken, effektiv und zeitnah zu kompensieren. Parameter, die einen unmittelbaren Einfluss auf die Güte der Messung haben, sind insbesondere große Strömungsgeschwindigkeits- oder Temperaturänderungen.

Ein mögliches Ablaufschema des Regelalgorithmus' sieht so aus, dass in regelmäßigen Abständen der Stellmechanismus den Winkel der Dickenschwingungsebene des piezoelektrischen Elements 5 relativ zum Radius der Rohrleitung 3 um jeweils kleine Winkelbeträge $\pm \Delta\theta i$ in positiver und negativer Drehrichtung verstellt; die entsprechenden Änderungen in der Signalstärke der Ultraschall-Messsignale werden aufgezeichnet. Anhand der aufgezeichneten Daten wird anschließend die Winkelstellung Θopt bestimmt, bei der eine maximale Signalstärke vorliegt. Die entsprechende, ggf. veränderte Winkelstellung des piezoelektrischen Elements 5 wird nachfolgend von der Regel-/Auswerteeinheit 9 über den Verstellmechanismus 7 angesteuert.

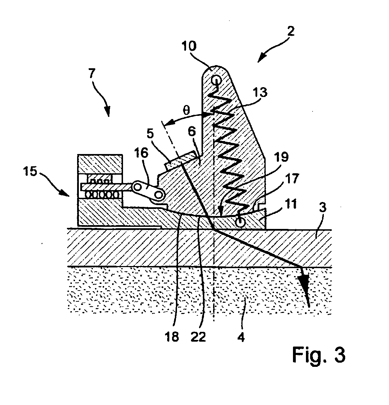

Bei der in Fig. 3 gezeigten Ausführungsform des erfindungsgemäßen winkel-verstellbaren Ultraschallsensors 2 erfolgt die Winkelverstellung am Vorlaufkörper 6, mit dem das piezoelektrische Element 5 starr verbunden ist. Hierbei hat die Unterseite - bzw. die erste gekrümmte Fläche 17 - der ersten Teilkomponente 10 des Vorlaufkörpers 6 im Längsschnitt die Form einer Kreiszylinderoberfläche. Die erste Teilkomponente 10 grenzt an die gekrümmte Fläche 18 der zweiten Teilkomponente 11. Die zweite Teilkomponente 11 ist an der Rohrleitung 3 befestigt. Die erste Teilkomponente 10 und die zweite Teilkomponente 11 sind über eine Zugfeder 13 miteinander verbunden. Zur Verbesserung der akustischen und der mechanischen Eigenschaften befindet sich zwischen den beiden Flächen 17, 18 eine Koppelpaste 22. Die an der Rohrleitung 3 befestigte zweite Komponente 11 ist zu einer Seite hin verlängert, um dort einen Verstellmechanismus 7 mit einem Stellaktor aufzunehmen. Dargestellt ist ein Schrittmotor, der eine kugelgelagerte Zug-/Druckstange vor- und zurück bewegen kann. Über ein Zwischengelenk 16, das mit dem Vorlaufkörper 6 fest verbunden ist, wird die gewünschte Winkelverstellung realisiert.

Im Falle eines Ultraschall-Durchflussmessgeräts 1, bei dem zwei Ultraschallsensoren 2 zum Einsatz kommen, ist es selbstverständlich notwendig, dass beide Ultraschallsensoren 2 einen Winkelverstellmechanismus 7 aufweisen. Bei der erfindungsgemäßen Vorrichtung haben entweder beide Ultraschallsensoren 2 einen fixen Abstand zueinander, oder der Abstand ist über einen zweiten Verstellmechanismus 8 variierbar ausgestaltet.

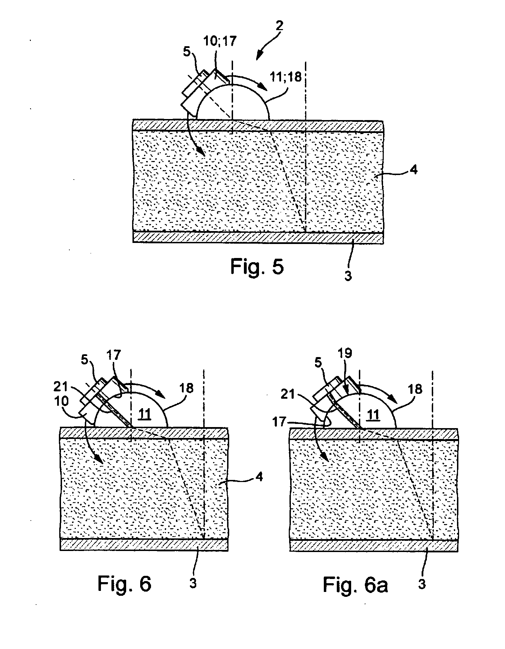

In der Fig. 5 sowie in den Figuren Fig. 6 und Fig. 6a sind weitere Ausgestaltungen des erfindungsgemäßen winkelverstellbaren Ultraschallsensors 2 zu sehen. Wiederum ist der Vorlaufkörper 6 aus zwei Teilen aufgebaut: der zweiten Teilkomponente 11, die mit der Rohrleitung 3 fest verbunden ist, und der ersten Teilkomponente 10. Im Längsschnitt hat die zweite Teilkomponente 11 die Form eines Halbkreises. Die an der zweiten Teilkomponente 11 anliegende erste gekrümmte Fläche 17 der ersten Teilkomponente 10 ist entsprechend konkav geformt, so dass die erste gekrümmte Fläche 17 der ersten Teilkomponente 10 und die zweite gekrümmte Fläche 18 der zweiten Teilkomponente 11 bündig aneinander grenzen. Bevorzugt ist im Bereich der Kontaktfläche 19 eine Koppelschicht 22 vorgesehen. Die erste Teilkomponente 10, die das piezoelektrische Element 5 trägt, ist bezüglich der zweiten Teilkomponente 11 drehbar gelagert. Die Drehung ist durch die beiden gekrümmten Pfeile angedeutet. Die Drehung kann wiederum manuell oder automatisch erfolgen. Der Vorteil der in Fig. 5 gezeigten Ausgestaltung besteht darin, dass der Austrittspunkt der Ultraschall-Messsignale bei einer Verstellung des Einstrahl-/Ausfallwinkels konstant ist. Wie in den Figuren Fig. 6 und Fig. 6a gezeigt, erfolgt die Winkeldrehung mittels eines Biegeelements 21, bei dem es sich bevorzugt um ein piezoelektrisches Element oder um ein Bi-Metall mit Heizdraht handelt.

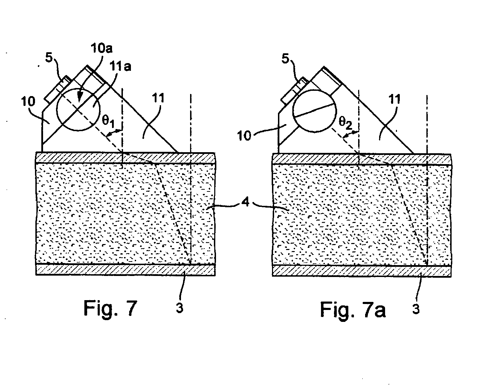

In den Figuren Fig. 7 und Fig. 7a ist eine weitere bevorzugte Ausführungsform des erfindungsgemäßen winkelverstellbaren Ultraschallsensors 2 schematisch visualisiert. Bei dieser Ausführungsform besteht sowohl die erste Teilkomponente 10 als auch die zweite Teilkomponente 11 aus jeweils zwei Teilen mit unterschiedlichen Schallgeschwindigkeiten. Die Winkelverstellung erfolgt über die Brechung des Schallstrahls an der Grenzfläche zwischen der ersten Teilkomponente 10 und dem ersten Teil der zweiten Teilkomponente 11a. Somit ist es möglich, das piezoelektrische Element 5 fest zu montieren und ohne anfällige, bewegliche elektrische Verbindungen anzubringen. Der Antrieb und die Verstellung erfolgt wiederum manuell, oder sie wird automatisch über einen Mikroprozessor geregelt. Die Teile 10, 10a; 11, 11a der beiden Teilkomponenten 10, 11 sind jeweils aus dem gleichen Material gefertigt, so dass sich beim Übergang keine Brechung oder Veränderung des Schallstrahls ergibt.

Bezugszeichenliste

1 Clamp-On Durchflussmessgerät

2 Ultraschallsensor

3 Rohrleitung

4 Medium

5 piezoelektrisches Element

6 Vorlaufkörper

7 erster Verstellmechanismus

8 zweiter Verstellmechanismus

9 Regel-/Auswerteeinheit

10 erste Teilkomponente

11 zweite Teilkomponente

12 Hebel

13 Feder

15 Linearantrieb

16 Gelenkverbindung

17 erste gekrümmte Fläche

18 zweite gekrümmte Fläche

19 Kontaktfläche

20 Richtungscodiereinheit

21 Biegelement, z.B. ein Piezo oder ein Bi-Metall mit Heizdraht

22 Koppelschicht

23 Stange

24 Handrad

25 Mikroprozessor

26 Ausnehmung / Bohrung

27 Speichereinheit

28 Gehäuse

**Patentansprüche**

1. Vorrichtung zur Bestimmung und/oder Überwachung des Volumen- oder des Massedurchflusses eines Mediums (4), das eine Rohrleitung (3) in Richtung der Längsachse (X) der Rohrleitung (3) durchströmt, mit zumindest einem Clamp-On Ultraschallsensor (2), der zumindest ein schallerzeugendes Element (5) und einen Vorlaufkörper (6) aufweist und der Ultraschall-Messsignale unter einem Einstrahl-/ Ausfallwinkel (Θ) in die Rohrleitung (3) einstrahlt bzw. aus der Rohrleitung (3) empfängt, wobei ein erster Verstellmechanismus (7) vorgesehen ist, der so ausgestaltet ist, dass der Einstrahl-/Ausstrahlwinkel (Θ) des Ultraschallsensors (2) in vorgegebenen Grenzen einstellbar ist, und mit einer Regel-/Auswerteeinheit (9) , die den Volumen- oder den Massendurch-fluss des Mediums (4) in der Rohrleitung (3) nach dem Laufzeitdifferenz-verfahren, dem Kreuzkorrelationsverfahren oder dem Dopplerverfahren ermittelt.

2. Vorrichtung nach Anspruch 1, wobei der Verstellmechanismus (7) so ausgestaltet ist, dass der Einstrahl-/Ausfallwinkel (Θ) des Ultraschallsensors (2) automatisch und/oder manuell verstellbar ist.

3. Vorrichtung nach Anspruch 1, wobei der Verstellmechanismus (7) im wesentlichen derart ausgestaltet ist, dass er eine Linearbewegung in eine definierte Drehbewegung des schallerzeugenden Elements (5) umsetzt.

4. Vorrichtung nach Anspruch 1, wobei der Vorlaufkörper (6) aus einer ersten Teilkomponente (10) und einer zweiten Teilkomponente (11) besteht.

5. Vorrichtung nach Anspruch 3, wobei es sich bei der ersten Teilkomponente (10) um ein im wesentlichen rotationssymmetrisches Element handelt, mit dem das schallerzeugende Element (5) verbunden ist und wobei die erste Teilkomponente (10) in einer korrespondierenden Ausnehmung (26) in der zweiten Teilkomponente (11) des Vorlaufkörpers (6) drehbar gelagert ist.

6. Vorrichtung nach Anspruch 5, wobei die erste Teilkomponente (10) über einen Hebel (12) gegen die Rückstellkraft einer Feder (13) drehbar in der zweiten Teilkomponente (11) gelagert ist.

7. Vorrichtung nach Anspruch 5, wobei die erste Teilkomponente (10) mit einem Übersetzungsantrieb drehbar in der zweiten Teilkomponente (11) gelagert ist.

8. Vorrichtung nach Anspruch 3, wobei die zweite Teilkomponente (11) eine gekrümmte Fläche (18) aufweist, auf der die erste Teilkomponente (10), mit der das schallerzeugende Element (5) verbunden ist, zwangsgeführt ist.

9. Vorrichtung nach Anspruch 8, wobei ein Linearantrieb (15) vorgesehen ist, der über eine Gelenkverbindung (16) mit der ersten Teilkomponente (10) verbunden ist.

10. Vorrichtung nach Anspruch 8, wobei die gekrümmte Fläche (18) der zweiten Teilkomponente (11) konkav oder konvex gekrümmt ist und wobei die an der korrespondierenden gekrümmten Fläche (18) der zweiten Teilkomponente (11) angrenzende Fläche (17) der ersten Teilkomponente (10) so ausgestaltet ist, dass die erste Teilkomponente (10) und zweite Teilkomponente (11) jeweils im Bereich ihrer Kontaktfläche (19) bündig aneinander anliegen.

11. Vorrichtung nach Anspruch 8 oder 10, wobei die gekrümmte Fläche (18) der zweiten Teilkomponente (11) im Längsschnitt die Form eines Halbkreises hat.

12. Vorrichtung nach Anspruch 8 oder 10, wobei die gekrümmte Fläche (17) der ersten Teilkomponente (10) und die gekrümmte Fläche (18) der zweiten Teilkomponente (11) derart ausgeführt sind, dass der Mittelpunkt der beiden gekrümmten Flächen (17, 18) zumindest näherungsweise mit dem Einkoppelpunkt der Schallsignale in die Rohrleitung (3) zusammenfällt.

13. Vorrichtung nach einem oder mehreren der vorhergehenden Ansprüche, wobei im Falle der Bestimmung des Volumen- und/oder Massedurchflusses des Mediums (4) durch die Rohrleitung (3) über das Laufzeitdifferenz-verfahren zwei Ultraschallsensoren (2) auf einer Verbindungslinie angeordnet sind, die parallel zur Längsachse (x) der Rohrleitung (3) ist.

14. Vorrichtung nach Anspruch 1, wobei ein zweiter Verstellmechanismus (8) vorgesehen ist, mit dem die beiden Ultraschallsensoren (2) längs der Verbindungslinie verstellbar sind.

15. Vorrichtung nach Anspruch 14, wobei an dem Verstellmechanismus (8) eine Richtungscodiereinheit (20) vorgesehen ist.

16. Vorrichtung nach Anspruch 13, 14 oder 15, wobei der zweite Verstellmechanismus (8) aus einer variierbaren oder starren Verbindung zwischen den beiden Ultraschallsensoren (2) besteht.

17. Vorrichtung nach Anspruch 1, wobei die Regel-/Auswerteeinheit (9) den ersten Verstellmechanismus (7) zur Einstellung des Einstrahl-/Ausfallwinkels (Θ) sukzessive so ansteuert, bis für das gesendete bzw. das empfangene Messsignal eine maximale Signalstärke ermittelt ist.

18. Vorrichtung nach Anspruch 1, wobei eine Speichereinheit (26) vorgesehen ist, in der in Abhängigkeit von Parametern, die den Einstrahl-/Ausstrahlwinkel (Θ) der Ultraschall-Messsignale in die Rohrleitung (3) bzw. aus der Rohrleitung (3) beeinflussen, entsprechende Sollwerte für den optimalen Einstrahl-/Ausfallwinkel (Θopt) abgespeichert sind.

19. Vorrichtung nach Anspruch 18, wobei die Regel-/Auswerteeinheit (9) anhand der aktuellen Werte der Parameter den entsprechend abgespeicherten optimalen Einstrahl-/Ausfallwinkel (Θ) bestimmt und wobei die Regel-/Auswerteeinheit (9) den ersten Verstellmechanismus (7) so ansteuert, dass die Ultraschall-Messsignale unter dem optimalen Einstrahl-/Ausfallwinkel (Θopt) in die Rohrleitung (3) ein- bzw. aus der Rohrleitung (3) ausgestrahlt werden.

20. Vorrichtung nach Anspruch 1, wobei der erste Stellmechanismus (7) im wesentlichen so ausgestaltet ist, dass er eine Verbiegung des Stellelements (21) eine definierte Drehbewegung des schallerzeugenden Elements (5) umsetzt.

21. Vorrichtung nach Anspruch 4, wobei die erste Teilkomponente (10) und die zweite Teilkomponente (11) des Vorlaufkörpers (6) aus dem gleichen Material gefertigt sind.

22. Vorrichtung nach Anspruch 4 oder Anspruch 21, wobei zwischen der ersten Teilkomponente (10) und der zweiten Teil-komponente (11) des Vorlaufkörpers (6) eine Koppelschicht (22) vorgesehen ist, die so ausgestaltet ist, dass sie den Übergang des Schallsignals zwischen den beiden Teilkomponenten (10, 11) verbessert.

23. Vorrichtung nach Anspruch 1, wobei dem ersten Verstellmechanismus (7) ein piezoelektrischer Antrieb (21) zugeordnet ist.

24. Vorrichtung nach Anspruch 1, wobei die beiden Teilkomponenten (10, 11) des Vorlaufkörpers (6) aus Materialien bestehen, die unterschiedliche Schallgeschwindigkeiten besitzen und die die Schallsignale unterschiedlich in Abhängigkeit von ihrer Position zur Ausbreitungsrichtung der Schallsignale brechen und/oder wobei das schallerzeugende Element (5) so an dem Gehäuse (28) angebracht ist, dass es von einer Verstellbewegung des Verstellmechanismus' (7) abgekoppelt ist.

**Claims**

1. Apparatus for determining and/or monitoring the volume flow or mass flow of a medium (4), which flows through a pipe (3) in the direction of the longitudinal axis (X) of the pipe (3), with a least one clamp-on ultrasonic sensor (2) having at least one sound-producing element (5) and an interfacing shoe (6) and emitting ultrasonic measuring signals into the pipe (3), or receiving ultrasonic measuring signals from the pipe, with an angle of irradiation/reflection (θ), where a first adjusting mechanism (7) is provided that is designed in such a way that the angle of irradiation/reflection (θ) of the ultrasonic sensor (2) can be adjusted at predefinable limits, and with a controller/evaluation unit (9) that determines the volume flow or mass flow of the medium (4) in the pipe (3) based on the time-of-flight method, the cross-correlation method, or the dual method.

2. Apparatus as per Claim 1, where the adjusting mechanism (7) is designed in such a way that the angle of irradiation/reflection (θ) of the ultrasonic sensor (2) can be adjusted automatically and/or manually.

3. Apparatus as per Claim 1, where the adjusting mechanism (7) is primarily designed in such a way that it converts a linear movement to a defined rotational movement of the sound-producing element (5).

4. Apparatus as per Claim 1, where the interfacing shoe (6) comprises a first subcomponent (10) and a second subcomponent (11).

5. Apparatus as per Claim 3, where the first subcomponent (10) is primarily a rotationally symmetric element to which the sound-producing element (5) is connected and where the first subcomponent (10) is pivot-mounted in a corresponding recess (26) in the second subcomponent (11) of the interfacing shoe (6).

6. Apparatus as per Claim 5, where the first subcomponent (10) is pivot-mounted in the second subcomponent (11) via a lever against the reset force of a spring (13).

7. Apparatus as per Claim 5, where the first subcomponent (10) is pivot-mounted in the second subcomponent (11) with a transmission.

8. Apparatus as per Claim 3, where the second subcomponent (11) has a curved surface (18) on which the first subcomponent (10) - to which the sound-producing element (5) is connected - is constrained to move.

9. Apparatus as per Claim 8, where a linear drive (15) is provided, said drive being connected to the first subcomponent (10) via an articulated connection (16).

10. Apparatus as per Claim 8, where the curved surface (18) of the second subcomponent (11) is concave or convex and where the surface (17) of the first subcomponent (10), which is adjacent to the corresponding curved surface (18) of the second subcomponent (11), is designed in such a way that the first subcomponent (10) and the second subcomponent (11) are flush with one another in the area of their contact surfaces (19).

11. Apparatus as per Claim 8 or 10, where the longitudinal section of the curved surface (18) of the second subcomponent (11) has the shape of a semi-circle.

12. Apparatus as per Claim 8 or 10, where the curved surface (17) of the first subcomponent (10) and the curved surface (18) of the second subcomponent (11) are designed in such a way that the center point of the two curved surfaces (17, 18) at least approximately coincides with the in-coupling point of the sound signals in the pipe (3).

13. Apparatus as per one or more of the previous claims, where, when the time-of flight method is used to determine the volume flow and/or mass flow of the medium (4) through the pipe (3), two ultrasonic sensors (2) are arranged on a connection line that runs parallel to the longitudinal axis (x) of the pipe (3).

14. Apparatus as per Claim 1, where a second adjusting mechanism (8) is provided with which the two ultrasonic sensors (2) can be adjusted along the connection line.

15. Apparatus as per Claim 14, where a direction encoder (20) is provided on the adjusting mechanism (8).

16. Apparatus as per Claim 13, 14 or 15, where the second adjusting mechanism (8) consists of a variable or rigid connection between the two ultrasonic sensors (2).

17. Apparatus as per Claim 1, where the control/evaluation unit (9) gradually controls the first adjusting mechanism (7) to set the angle of irradiation/reflection ($\theta$) until a maximum signal strength is determined for the measuring signal transmitted or received.

18. Apparatus as per Claim 1, where a memory unit (26) is provided in which set values for the optimum angle of irradiation/reflection ($\theta$) are saved depending on parameters that influence the angle of irradiation/reflection ($\theta$) of the ultrasonic signals into the pipe (3) or out of the pipe (3).

19. Apparatus as per Claim 18, where the control/evaluation unit (9) determines the optimum angle of irradiation/reflection ($\theta$) stored on the basis of the current values of the parameters, and where the control/evaluation unit (9) controls the first adjusting mechanism (7) in such a way that the ultrasonic measuring signals are emitted into the pipe (3) or out of the pipe (3) with the optimum angle of irradiation/reflection ($\theta$ opt).

20. Apparatus as per Claim 1, where the first adjusting mechanism (7) is primarily designed in such a way that it converts a deflection of the actuator (21) into a defined rotary movement of the sound-producing element (5).

21. Apparatus as per Claim 4, where the first subcomponent (10) and the second subcomponent (11) of the interfacing shoe (6) are made from the same material.

22. Apparatus as per Claim 4 or 21, where a coupling layer (22) is provided between the first subcomponent (10) and the second subcomponent (11) of the interfacing shoe (6), said layer being designed in such a way that it improves the transition of the sound signal between the two subcomponents (10, 11).

23. Apparatus as per Claim 1, where a piezoelectric drive (21) is assigned to the first adjusting mechanism (7).

24. Apparatus as per Claim 1, where the two subcomponents (10, 11) of the interfacing shoe (6) are made from materials which have different sound velocities and which refract the sound signals differently depending on their position vis-à-vis the direction of propagation of the sound signals and/or where the sound-producing element (5) is arranged on the housing (28) in such a way that it is decoupled from an adjustment movement of the adjusting mechanism (7).

**Revendications**

1. Dispositif destiné à la détermination et/ou la surveillance du débit volumique ou massique d'un produit (4), qui s'écoule à travers une conduite (3) en direction de l'axe longitudinal (X) de la conduite (3), avec au moins un capteur à ultrasons Clamp-On (2), qui comporte au moins un élément générateur d'ultrasons (5) et un avant-corps (6) et qui émet dans la conduite (3) ou reçoit de la conduite (3) des signaux de mesure ultrasonores selon un angle d'incidence / de réflexion (□), un premier mécanisme de réglage (7) étant prévu, lequel est conçu de telle manière que l'angle d'incidence / de réflexion (□) du capteur à ultrasons (2) est réglable selon des limites prédéfinies, et avec une unité de régulation / d'exploitation (9), qui détermine le débit volumique ou massique (4) dans la conduite (3) d'après le principe de la différence des temps de propagation, de la méthode de la corrélation croisée ou de la méthode Doppler.

2. Dispositif selon la revendication 1, pour lequel le mécanisme de réglage (7) est conçu de telle manière que l'angle d'incidence / de réflexion (□) du capteur à ultrasons (2) est réglable automatiquement et/ou manuellement.

3. Dispositif selon la revendication 1, pour lequel le mécanisme de réglage (7) est pour l'essentiel conçu de telle manière à convertir un mouvement linéaire en un mouvement de rotation défini de l'élément générateur d'ultrasons (5).

4. Dispositif selon la revendication 1, pour lequel l'avant-corps (6) se compose d'un premier sous-composant (10) et d'un deuxième sous-composant (11).

5. Dispositif selon la revendication 3, pour lequel il s'agit, concernant le premier sous-composant (10), d'un élément pour l'essentiel à symétrie de révolution, avec lequel l'élément générateur d'ultrasons (5) est relié et pour lequel le premier sous-composant (10) est logé de façon pivotante dans une cavité (26) correspondante, dans le deuxième sous-composant (11) de l'avant-corps (6).

6. Dispositif selon la revendication 5, pour lequel le premier sous-composant (10) est logé par l'intermédiaire d'un levier (12) contre la force de rappel d'un ressort (13) de façon pivotante dans le deuxième sous-composant (11).

7. Dispositif selon la revendication 5, pour lequel le premier sous-composant (10) est logé avec un entraînement multiplicateur de façon pivotante dans le deuxième sous-composant (11).

8. Dispositif selon la revendication 3, pour lequel le deuxième sous-composant (11) présente une surface curviligne (18), sur laquelle le premier sous-composant (10) est relié avec l'élément générateur d'ultrasons (5) au moyen d'un guidage forcé.

9. Dispositif selon la revendication 8, pour lequel est prévu un entraînement linéaire (15), lequel est relié par l'intermédiaire d'une articulation (16) avec le premier sous-composant (10).

10. Dispositif selon la revendication 8, pour lequel la surface curviligne (18) du deuxième sous-composant (11) est concave ou convexe et pour lequel la surface (17) du premier sous-composant (10) avoisinant la surface curviligne (18) correspondante du premier sous-composant (10) est conçue de telle manière que le premier sous-composant (10) et le deuxième sous-composant (11) repose de façon affleurante l'un contre l'autre dans la zone de leur surface de contact (19).

11. Dispositif selon la revendication 8 ou 10, pour lequel la surface curviligne (18) du deuxième sous-composant (11) présente, en coupe longitudinale, la forme d'un demi-cercle.

12. Dispositif selon la revendication 8 ou 10, pour lequel la surface curviligne (17) du premier sous-composant (10) et la surface curviligne (18) du deuxième sous-composant (11) sont réalisées de telle manière que le centre des deux surfaces curvilignes (17, 18) coïncident au moins approximativement avec le point de couplage des signaux ultrasonores dans la conduite (3).

13. Dispositif selon l'une ou plusieurs des revendications précédentes, pour lequel deux capteurs à ultrasons (2) sont disposés sur une ligne de jonction parallèle à l'axe longitudinal (x) de la conduite (3), dans le cas de la détermination du débit volumique et/ou massique du produit (4).

14. Dispositif selon la revendication 1, pour lequel est prévu un deuxième mécanisme de réglage (8), avec lequel les deux capteurs à ultrasons (2) sont réglables le long de la ligne de jonction.

15. Dispositif selon la revendication 14, pour lequel est prévue une unité de codage de direction (20) sur le mécanisme de réglage (8).

16. Dispositif selon la revendication 13, 14 ou 15, pour lequel le deuxième mécanisme de réglage (8) est constitué d'une liaison variable ou rigide entre les deux capteurs à ultrasons (2).

17. Dispositif selon la revendication 1, pour lequel l'unité de régulation / d'exploitation (9) commande successivement le premier mécanisme de réglage (7) en vue du réglage de l'angle d'incidence / de réflexion (□), jusqu'à ce qu'une intensité de signal maximale soit déterminée pour le signal de mesure émis ou reçu.

18. Dispositif selon la revendication 1, pour lequel est prévue une unité de mémoire (26), dans laquelle sont enregistrées, en fonction de paramètres, qui influencent l'angle d'incidence / de réflexion (□) des signaux de mesure ultrasonores dans la conduite (3) ou à partir de la conduite (3), des valeurs de consigne appropriées pour l'angle d'incidence / de réflexion optimal (□opt).

19. Dispositif selon la revendication 18, pour lequel l'unité de régulation / d'exploitation (9) détermine, au moyen des valeurs actuelles des paramètres, l'angle d'incidence / de réflexion (□) optimal enregistré en conséquence et pour lequel l'unité de régulation / d'exploitation (9) commande le premier mécanisme de réglage (7) de telle manière que les signaux de mesure ultrasonores soient émis selon l'angle d'incidence / de réflexion optimal (□opt) dans la conduite (3) ou à partir de la conduite (3).

**20.** Dispositif selon la revendication 1, pour lequel le premier mécanisme de réglage (7) est pour l'essentiel conçu de telle manière à convertir une flexion de l'élément de commande (21) en un mouvement de rotation défini de l'élément générateur d'ultrasons (5).

**21.** Dispositif selon la revendication 4, pour lequel le premier sous-composant (10) et le deuxième sous-composant (11) de l'avant-corps (6) sont fabriqués à partir du même matériau.

**22.** Dispositif selon la revendication 4 ou la revendication 21, pour lequel est prévue entre le premier sous-composant (10) et le deuxième sous-composant (11) de l'avant-corps (6) une couche de couplage (22), qui est conçue de telle manière à améliorer le passage du signal ultrasonore entre les deux sous-composants (10, 11).

**23.** Dispositif selon la revendication 1, pour lequel un entraînement piézoélectrique (21) est attribué au premier mécanisme de réglage (7).

**24.** Dispositif selon la revendication 1, pour lequel les deux sous-composants (10, 11) de l'avant-corps (6) sont constitués de matériaux, qui possèdent des vitesses ultrasonores différentes et qui réfractent les signaux ultrasonores de façon différente en fonction de leur position par rapport à la direction de propagation des signaux ultrasonores et/ou pour lequel l'élément générateur d'ultrasons (5) est disposé sur l'appareil (28) de telle manière à être découplé d'un mouvement de réglage du mécanisme de réglage (7).

Fig. 1

Fig. 2

Fig. 3

Fig. 4

Fig. 5

Fig. 6

Fig. 6a

Fig. 7

Fig. 7a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1962649 A1
- EP 0686255 B1
- US 4484478 A
- US 4598593 A